# EUROPÄISCHE PATENTSCHRIFT

(11) **EP 4 062 750 B1**
(45) Veröffentlichungstag und Bekanntmachung des Hinweises auf die Patenterteilung: **03.09.2025**
(21) Anmeldenummer: 21164921.5
(22) Anmeldetag: 25.03.2021
(51) Int. Cl.: A01G 9/14, A01G 9/24, A01G 31/06, B65G 57/03, B65G 65/00

(54) **GEWÄCHSHAUSANORDNUNG**
GREENHOUSE ARRANGEMENT
AGENCEMENT DE SERRE

(43) Veröffentlichungstag der Anmeldung: 28.09.2022
(73) Patentinhaber: Jungheinrich Aktiengesellschaft, 22047 Hamburg (DE)
(72) Erfinder: ROLLWA, Volker, 66953 Pirmasens (DE); CAVELIUS, Jörg, 61118 Bad Vilbel (DE); LIEBHABER, Markus, 61440 Oberursel (DE)
(74) Vertreter: Keil & Schaafhausen Patentanwälte PartGmbB

(56) Entgegenhaltungen:
- WO-A1-2021/037901
- DE-B3- 102011 050 545
- GB-A- 2 130 555
- JP-A- H09 308 377
- US-A1- 2019 246 571

## Beschreibung

Die Erfindung betrifft ein Verfahren zum Betreiben einer Gewächshausanordnung mit einem Blocklager, wenigstens einem Blocklagerelement und wenigstens einem Fahrzeug.

Weiterhin betrifft die Erfindung eine Gewächshausanordnung mit einem Blocklager, wenigstens einem Blocklagerelement und wenigstens einem Fahrzeug, wobei im Blocklager wenigstens ein Blocklagerelement temporär aufnehmbar ist.

GB 2 130 555 A beschreibt Transport-, Lager und Verkaufsbehälter, wobei der Behälter mit einem stapelbaren Körper zur Aufnahme von insbesondere bepflanzten Blumentöpfen in Reihen nebeneinander, wobei innenliegende Wandteile zum seitlichen Aussteifen und Halten der eingesetzten Gegenstände ausgebildet sind. Der Körper ist schalenförmig ausgebildet und weist einen Boden auf, wobei an am Boden vorgesehenen Erhebungen ausgebildet sind, die zum seitlichen Halten und Aussteifen der eingebrachten Gegenstände dienen und die zur Aufnahme von Töpfen unterschiedlicher Größe in unterschiedlichen Anordnungen ausgebildet sind. Die stapelbaren Körper können durch Abstandshalter voneinander beabstandet gestapelt werden.

JP H09 308377 A beschreibt eine Vorrichtung zum Züchten von Setzlingen. Diese Vorrichtung weist ein erstes Bodenelement mit einer Saatkammer auf. Weiterhin ist ein zweites Bodenelement vorgesehen, in welchem eine Grünkammer und einer Trocknungskammer angeordnet sind. Ein Fahrzeug überführt Anzuchtschalen von der Saatkammer zur Grünkammer und weiter zur Trocknungskammer.

WO 2021/037901 A1 beschreibt ein Verfahren eine Vorrichtung zur Aufzucht und Behandlung von Pflanzen in einer klimatisierten Pflanzenzucht-Vorrichtung.

Dabei werden Pflanzschalen mit Pflanzen durch einen Längsförderer in einem angenäherten Kreislauf von einem Bedienbereich ausgehend entlang eines Wachstumsbereichs zurück zum Bedienbereich gefördert, wobei in der Pflanzenzucht-Vorrichtung mehrere Längsförderer angeordnet sind, dass die Förderung der Pflanzenschalen, dadurch erfolgt, dass am Auslaufende der in einer Richtung fördernden Längsförderer eine Umsetzeinheit angeordnet ist, welche die Pflanzenschale von dem einen, in der einen Richtung fördern-den Längsförderer entnimmt und auf einen in entgegen gesetzter Richtung fördernden Längsförderer umsetzt, der die Pflanzenschale zurück zum Bedienbereich fördert.

DE 10 2011 050 545 B3 beschreibt eine transportable Pflanzenanbaueinrichtung für abgelegene Orte, die eine Mehrzahl von übereinander angeordneten Fördereinrichtungen mit jeweils einer Oberseite, einer Unterseite und einer Fördereinrichtung auf, wobei eine erste Fördereinrichtung unterhalb einer benachbarten zweiten Fördereinrichtung angeordnet ist, wobei zwei benachbarte Fördereinrichtungen so geneigt zueinander angeordnet sind, dass sich der vertikale Abstand zwischen der Oberseite und der ersten Förderrichtung und der Unterseite der zweiten Förderrichtung entlang der Förderrichtung der ersten Fördereinrichtung vergrößert. Eine Mehrzahl von Pflanzkästen dient zur Aufnahme jeweils einer Pflanze, wobei die Pflanzkästen auf den Oberseiten der Fördereinrichtungen angeordnet und während der Wachstumsphase der Pflanzen in der Förderrichtung förderbar sind.

US 2019/24671 A1 beschreibt Anbausysteme und Anbaumethoden. Dabei werden Pflanzen in Behältern gezüchtet und die Behälter in Stapeln gelagert. Über den Stapeln verläuft ein gitter-förmiges Schienennetz, auf dem Lastaufnahmemittel laufen. Die Lastaufnahmemittel nehmen die Behälter aus den Stapeln und setzen sie an anderen Stellen in den Stapeln ab oder setzen sie an Stationen ab, an denen Waren entnommen werden können. Die Behälter können mit einem oder mehreren der folgenden Dienste ausgestattet sein: Strom, Stromsteuerung, Heizung, Beleuchtung, Kühlung, Sensorik, Datenerfassung, Anbaumittel, Wasser und Nährstoffe.

Ein Blocklager bzw. eine Blocklageranordnung beschreibt eine Lageranordnung mit wenigstens einem Blocklagerelementaufnahmeraum. In dem Blocklagerelementaufnahmeraum können stapelbare Blocklagerelemente ein- und ausgelagert werden. Dazu wird das Blocklagerelement durch einen Beschickungsraum in den Blocklagerelementaufnahmeraum ein- oder ausgelagert. Der Beschickungsraum kann in Schwerkraftrichtung oberhalb oder unterhalb des Blocklagerelementaufnahmeraums angeordnet sein, sodass eine Ein- oder Auslagerrichtung in Schwerkraftrichtung oder entgegen der Schwerkraftrichtung orientiert ist. Ist der Beschickungsraum oberhalb des Blocklagerelementaufnahmeraums angeordnet, so ist die Einlagerrichtung in Schwerkraftrichtung und die Auslagerrichtung entgegen der Schwerkraftrichtung orientiert. Ist der Beschickungsraum in Schwerkraftrichtung unterhalb des Blocklagerelementaufnahmeraums angeordnet, so ist die Einlagerrichtung entgegen und die Auslagerrichtung in der Schwerkraftrichtung ausgerichtet. Werden mehrere Blocklagerelemente in den Blocklagerelementaufnahmeraum eingelagert, entsteht ein Blocklagerelementstapel. Weitere Bezeichnungen für das Blocklager sind Stapellager oder Behälterstapellager. In der nachfolgenden Erläuterung ist der Blocklagerelementaufnahmeraum in Schwerkraftrichtung oberhalb des Beschickungsraums angeordnet.

Im Rahmen einer Gewächshausanordnung werden Pflanzen großgezogen. Dazu benötigen die Pflanzen bzw. Setzlinge ein entsprechendes Umfeld mit einer passenden Nährstoffversorgung, Beleuchtung oder dergleichen.

Es ist die Aufgabe der vorliegenden Erfindung, die Gewächshausanordnung effizient zu gestalten.

Diese Aufgabe wird durch die Merkmale des Anspruchs 1 gelöst.

Dabei weist jedes Blocklagerelement einen Trägerrahmen und eine Pflanzenaufnahme auf, wobei die Pflanzenaufnahme lösbar mit dem Trägerrahmen in Eingriff gebracht wird, wobei das Blocklager wenigstens eine erste Zone und eine zweite Zone und wenigstens einen ersten Trägerrahmen und wenigstens einen zweiten Trägerrahmen aufweist, wobei die Pflanzenaufnahme in der ersten Zone mit dem ersten Trägerrahmen in lösbarem Eingriff ist, und die Pflanzenaufnahme anschließend in die zweite Zone überführt wird, wobei die Pflanzenaufnahme im Rahmen der Überführung von der ersten Zone in die zweite Zone von dem ersten Trägerrahmen auf den zweiten Trägerrahmen überführt wird, wobei die Pflanzenaufnahme in der zweiten Zone in lösbarem Eingriff mit dem zweiten Trägerrahmen gebracht wird.

Dabei unterscheiden sich der erste Trägerrahmen und der zweite Trägerrahmen beispielsweise in ihrer Ausstattung, Form oder dergleichen. Weiterhin herrschen in der ersten Zone und in der zweiten Zone beispielsweise unterschiedliche Gegebenheiten, wie beispielsweise eine CO₂-Konzentration, Luftfeuchtigkeit oder dergleichen.

Dies ermöglicht eine Anpassung der jeweiligen Gegebenheiten an ein Wachstumsstadium der eingelagerten Pflanzen, sodass eine gute Effizienz vorliegt.

Vorzugsweise wird in der ersten Zone eine mit Setzlingen und/oder Pflanzen in einer ersten Wachstumsphase bestückten Pflanzenaufnahme durch eine erste Beleuchtungsanordnung eines in Schwerkraftrichtung oberhalb angeordneten ersten Trägerrahmens beleuchtet und/oder in der zweiten Zone Pflanzen eine in einer zweiten Wachstumsphase aufweisende Pflanzenaufnahme durch eine zweite Beleuchtungsanordnung eines in Schwerkraftrichtung oberhalb angeordneten zweiten Trägerrahmens beleuchtet. Setzling umfassen beispielsweise auch frisch eingesäte Samen zur Keimung oder dergleichen. Die an die Wachstumsphase angepasste Beleuchtungsanordnung ermöglicht eine Energieeinsparung, da Setzlinge und/oder kleine Pflanzen in einer ersten Wachstumsphase beispielsweise keine Beleuchtung oder nur eine geringere Beleuchtungsintensität benötigen als Pflanzen in einer späteren Wachstumsphase. Weiterhin können dadurch die Bedingungen, insbesondere die Beleuchtung, an die Wachstumsphase angepasst werden, so dass die Setzlinge und/oder Pflanzen optimale Wachstumsbedingungen vorfinden. Somit wachsen die Setzlinge und/oder Pflanzen schnell. Dies führt zu erhöht einem guten Durchsatz der Gewächshausanordnung.

Vorzugsweise wird die Pflanzenaufnahme an einem Einlagerungsplatz außerhalb des Blocklagers mit Setzlingen und/oder Pflanzen bestückt und anschließend mit dem ersten Trägerrahmen in Eingriff gebracht und in die erste Zone des Blocklagers eingelagert. Außerhalb des Blocklagers können die Setzlinge und/oder Pflanzen beispielsweise händisch durch Personen und/oder automatisch durch Roboter in die Pflanzenaufnahme überführt werden. Durch die Trennung der Einlagerung von der eigentlichen Lagerung innerhalb des Blocklagers kann innerhalb des Blocklagers eine entsprechende Atmosphäre aufrechterhalten werden. Außerdem wird durch die Trennung von Einlagerung, im Sinne von Einpflanzung der Pflanzen, und Lagerung eine Verunreinigung der im Blocklager befindlichen Pflanzen und/oder Setzlinge durch Personen verhindert, so dass Störungen im Betriebsablauf vermieden werden.

Vorzugsweise wird die Pflanzenaufnahme im Rahmen einer Überführung von dem ersten Trägerrahmen auf den zweiten Trägerrahmen an einem Umlagerungsplatz umgelagert. Sobald die Pflanzen und/oder Setzlinge eine gewisse Größe erreicht haben, wird die komplette Pflanzenaufnahme von dem ersten Trägerrahmen auf den zweiten Trägerrahmen überführt. Dabei ist der erste Trägerrahmen an die erste Wachstumsphase angepasst, und der zweite Trägerrahmen an die zweite Wachstumsphase angepasst. Entsprechend ist beispielsweise eine Ausdehnung in Schwerkraftrichtung des ersten Trägerrahmens geringer als eine Ausdehnung des zweiten Trägerrahmens in Schwerkraftrichtung. Durch die Umlagerung wird auf die Bedürfnisse der Pflanzen in einer jeweiligen Wachstumsphase eingegangen, sodass die Pfalzen gut gedeihen. Entsprechend können mehr erste Trägerrahmen als zweite Trägerrahmen in einem Raum mit einer definierten Ausdehnung in Schwerkraftrichtung angeordnet werden.

Vorzugsweise wird der Trägerrahmen mit der Pflanzenaufnahme mit erntefähigen Pflanzen zu einem Auslagerungsplatz überführt, wobei an dem Auslagerungsplatz die Pflanzenaufnahme von dem Trägerrahmen getrennt wird. Durch die Trennung der Pflanzenaufnahme von dem Trägerrahmen, hier dem zweiten Trägerrahmen, ist die Pflanzenaufnahme gut zugänglich, so dass beispielsweise durch Personen und/oder Roboter geerntet werden kann. Dies ermöglicht eine effiziente Ernte der Pflanzen.

Vorzugsweise wird die Pflanzenaufnahme ausgehend von dem Auslagerungsplatz zu dem Einlagerungsplatz überführt, wobei die Pflanzenaufnahme auf dem Weg von dem Auslagerungsplatz zum Einlagerungsplatz gereinigt wird. Durch die Reinigung werden sämtliche Verschmutzungen der Pflanzenaufnahme beseitigt, so dass die einzulagernden Setzlinge und/oder Pflanzen eine saubere Pflanzenaufnahme vorfinden, wodurch die Gefahr einer Schimmelbildung, Entstehung von Schädlingen oder dergleichen geringgehalten wird.

Der Trägerrahmen kann beispielsweise zu dem Umlagerungsplatz geführt werden, wobei der Trägerrahmen hierbei beispielsweise gewartet oder gereinigt werden kann. Dies erhöht die Lebensdauer der Trägerrahmen.

Dabei wird die Pflanzenaufnahme beispielsweise außerhalb des Blocklagers von dem Auslagerungsplatz zu dem Einlagerungsplatz überführt, wobei die Pflanzenaufnahme auch außerhalb des Blocklagers gereinigt wird.

Vorzugsweise weist die Gewächshausanordnung einen ersten Puffer und einen zweiten Puffer auf, wobei erste Transportrahmen mit einer unbestückten Pflanzenaufnahme oder ohne die Pflanzenaufnahme in dem ersten Puffer entnehmbar eingelagert werden und zweite Transportrahmen mit einer unbestückten Pflanzenaufnahme oder ohne die Pflanzenaufnahme in dem zweiten Puffer entnehmbar eingelagert werden. Dadurch werden Pufferkapazitäten geschafft, so dass ein störungsfreier Ablauf der Gewächshausanordnung sichergestellt wird.

Weiterhin kann der erste Puffer beispielsweise in dem zweiten Puffer integriert sein. Dadurch wird der benötigte Platzbedarf gering gehalten.

Weiterhin wird die Aufgabe durch die Merkmale des Anspruchs 8 gelöst.

Dazu weist das Blocklagerelement einen Trägerrahmen und eine mit dem Trägerrahmen lösbar in Eingriff stehende Pflanzenaufnahme auf, wobei das Blocklager wenigstens eine erste Zone und eine zweite Zone aufweist, wobei ein erster Trägerrahmen mit der Pflanzenaufnahme ein erstes Blocklagerelement bildet, und ein zweiter Trägerrahmen mit der Pflanzenaufnahme ein zweites Blocklagerelement bildet, wobei sich der erste Trägerrahmen vom zweiten Trägerrahmen unterscheidet, wobei das erste Blocklagerelement in der ersten Zone einlagerbar ist und das zweite Blocklagerelement in der zweiten Zone einlagerbar ist, wobei die Pflanzenaufnahme von dem ersten Trägerrahmen auf den zweiten Trägerrahmen überführbar ist.

Durch diese Anordnung können die Trägerrahmen getrennt von der Pflanzenaufnahme gehändelt werden. Dadurch entfällt ein "Umtopfen" der Setzlinge und/oder Pflanzen zwischen einem Aufenthalt in der ersten Zone und der Ernte. Dies verringert die Belastung der Pflanzen und/oder Setzlinge während des Wachstums, so dass die Pflanzen und/oder Setzlinge ungestört wachsen können, ohne neues Wurzelwerk generieren zu müssen.

Setzlinge und/oder Pflanzen, auch Pflanzen genannt, bezeichnen in dieser Anmeldung sämtliche Wachstumsstadien einer Pflanze, ausgehend von einem Samen oder dergleichen bis zu einer erntereifen Pflanze.

Die erste Zone ist dabei an eine erste Wachstumsphase der Pflanze angepasst, so dass die Pflanze innerhalb dieser ersten Wachstumsphase optimale Wachstumsbedingungen vorfindet. Die zweite Zone ist beispielsweise an eine zweite Wachstumsphase der Pflanze angepasst, so dass die Pflanze innerhalb der zweiten Wachstumsphase optimale Wachstumsbedingungen vorfindet. Dadurch wachsen die Pflanzen schnell, so dass ein hoher Durchsatz des Blocklagers und der Gewächshausanordnung erreicht wird.

Vorzugsweise weist der erste Trägerrahmen eine erste Beleuchtungsanordnung und/oder der zweite Trägerrahmen weist eine zweite Beleuchtungsanordnung auf. Durch diese Beleuchtungsanordnungen können die Pflanzen entsprechend ihrer Wachstumsphase beleuchtet werden, so dass beispielsweise eine Pflanze in der ersten Wachstumsphase mit einer geringeren Intensität beleuchtet werden als in der zweiten Wachstumsphase. Die Anpassung der Beleuchtungsanordnung an die jeweilige Wachstumsphase ermöglicht ein gutes Wachstum der Pflanzen.

Vorzugsweise ist eine Ausdehnung des ersten Trägerrahmens in Schwerkraftrichtung kleiner als eine Ausdehnung des zweiten Trägerrahmens in Schwerkraftrichtung. Dadurch können mehr erste Trägerrahmen in einen Blocklagerelementaufnahmeraum mit einer definierten vertikalen Ausdehnung eingelagert werden als zweite Trägerrahmen. Folglich kann die erste Zone kleiner ausgebildet werden als die zweite Zone. Dadurch wird der Platzbedarf geringgehalten.

Vorzugsweise weist die Gewächshausanordnung einen Einlagerungsplatz, einen Auslagerungsplatz und einen Umlagerungsplatz auf. In dem Einlagerungsplatz können beispielsweise Pflanzen auf die Pflanzenaufnahme überführt werden. Anschließend wird die Pflanzenaufnahme mit dem ersten Trägerrahmen in Eingriff gebracht. Bei dem Umlagerungsplatz wird die Pflanzenaufnahme beispielsweise von einem ersten Trägerrahmen auf einen zweiten Trägerrahmen überführt. Bei dem Auslagerungsplatz werden Trägerrahmen und Pflanzenaufnahme voneinander gelöst, wobei am Auslagerungsplatz weiterhin beispielsweise geerntet wird. An dem jeweiligen Platz, Einlagerungsplatz, Auslagerungsplatz oder Umlagerungsplatz, kann beispielsweise eine Peripherie an die Aufgabe des jeweiligen Platzes angepasst werden. Dadurch wird eine gute Effizienz erreicht.

Vorzugsweise umfasst der Einlagerungsplatz und/oder der Auslagerungsplatz den Umlagerungsplatz, und/oder der Einlagerungsplatz umfasst den Auslagerungsplatz. Durch diese Anordnung können mehrere Aufgaben, wie beispielsweise der Einlagerung, des Umlagerns und des Auslagerns bzw. des Erntens an einer Stelle erfolgen. Dadurch wird der Platzbedarf weiter reduziert, so dass die Gewächshausanordnung kompakt ist.

Vorzugsweise ist zwischen dem Auslagerungsplatz und dem Einlagerungsplatz eine Überführungsanordnung vorgesehen. Die Überführung überführt beispielsweise eine Pflanzenaufnahme. Dadurch kann die Pflanzenaufnahme von dem Auslagerungsplatz ausgehend zu dem Einlagerungsplatz überführt werden, so dass im Auslagerungsplatz ausreichend Pflanzenaufnahmen zur Verfügung stehen. Dadurch wird ein effizienter Betriebsablauf ermöglicht.

Vorzugsweise weist die Überführungsanordnung eine Reinigungseinrichtung auf. Die Reinigungseinrichtung reinigt dabei beispielsweise die Pflanzenaufnahme. Dadurch können Pflanzen in eine saubere Pflanzenaufnahme eingesetzt werden. Dies reduziert die Keimbelastung, so dass spätere mögliche Betriebsausfälle oder Ernteausfälle vermieden werden.

Vorzugsweise weist das Blocklager einen ersten Puffer zur Aufnahme von wenigstens einem ersten Transportrahmen und einen zweiten Puffer zur Aufnahme von wenigstens einem zweiten Transportrahmen auf. Durch die Puffer können stets ausreichend Transportrahmen zur Verfügung gestellt werden, so dass ein reibungsloser Betriebsablauf ermöglicht wird. Dabei kann beispielsweise der erste Puffer in dem zweiten Puffer integriert werden. Dies führt zu einer kompakten Gewächshausanordnung.

Die Erfindung wird im Folgenden anhand eines bevorzugten Ausführungsbeispiels in Verbindung mit der Zeichnung beschrieben. Hierin zeigen:
- Fig. 1: eine Draufsicht auf eine Gewächshausanordnung;
- Fig. 2: eine schematische Darstellung eines Ablaufs zum Betreiben der Gewächshausanordnung.

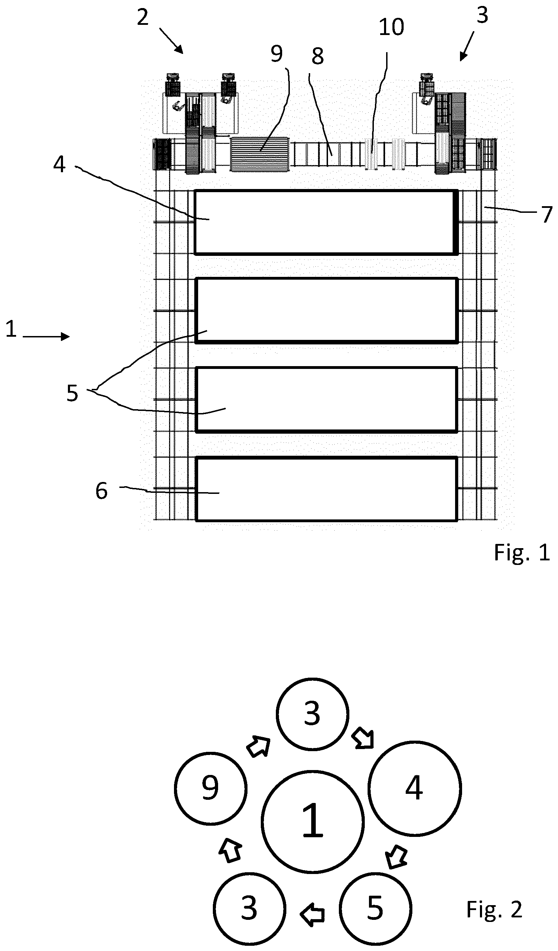

In Fig. 1 ist eine Gewächshausanordnung 1 dargestellt mit einem Auslagerungsplatz 2, einem Einlagerungs-/Umlagerungsplatz 3, einer ersten Zone 4, einer zweiten Zone 5, einem Puffer 6, Verfahrwegen 7 für ein nicht dargestelltes Fahrzeug, einer Überführungsanordnung 8, einer Reinigungseinrichtung 9 und einer Pflanzenaufnahme 10, die mit einem nicht dargestellten Trägerrahmen zeitweise in Eingriff steht. Die erste Zone 4, die zweite Zone 5, der Puffer 6 sowie ein Teil der Verfahrwege 7 sind innerhalb eines Blocklagers angeordnet.

Die erste Zone 4, die zweite Zone 5 und der Puffer 6 weisen nicht dargestellte Blocklagerelementaufnahmeräume auf, in die von in Schwerkraftrichtung unten durch einen nicht dargestellten Beschickungsraum Blocklagerelemente (siehe unten) ein- und ausgelagert werden.

Der Ablauf eines Zyklusses im Betrieb der Gewächshausanordnung 1 wird im Folgenden anhand der Fig. 2 dargestellt. An dem Einlagerungs-/Umlagerungsplatz 3 wird eine Pflanzenaufnahme 10 mit Samen bestückt. Weiterhin wird an dem Einlagerungs-/Auslagerungsplatz die mit Samen bestückte Pflanzenaufnahme 10 in Eingriff mit einem ersten Trägerrahmen gebracht. Zusammen bilden die Pflanzenaufnahme 10 und der erste Trägerrahmen ein erstes Blocklagerelement.

Das erste Blocklagerelement wird in die erste Zone, bzw. einen Blocklagerelementaufnahmeraum in der ersten Zone, überführt.

In der ersten Zone 4 verweilt das erste Blocklagerelement eine definierte Zeit, bis die Samen ein definiertes Wachstumsstadium erreicht haben.

Damit die Samen eine optimale Wachstumsumgebung vorfinden, kann die Atmosphäre innerhalb der ersten Zone angepasst werden. Die Beleuchtungsverhältnisse werden dabei über nicht dargestellte Beleuchtungsanordnungen an den Trägerrahmen realisiert. Je nach Pflanzenart bevorzugen Samen eine lichtintensive oder eher dunklere Umgebung zum Keimen. Entsprechend der Vorlieben kann der erste Trägerrahmen mit entsprechenden Beleuchtungsanordnungen ausgerüstet werden. Weiterhin sind Samen und deren Keimlinge kleiner als Pflanzen in späteren Wachstumsphasen. Entsprechend weist der erste Trägerrahmen eine in Schwerkraftrichtung gemessene angepasste Ausdehnung an die erste Wachstumsphase auf.

Nach einer gewissen Zeit benötigen die Keimlinge, die aus dem Samen entstanden sind, eine andere Umgebung sowie andere Platzverhältnisse. Dazu wird das komplette erste Blocklagerelement samt erstem Trägerrahmen und Pflanzenaufnahme 10 aus der ersten Zone 4 zu dem Einlagerungs-/Umlagerungsplatz 3 überführt. An dem Einlagerungs-/Umlagerungsplatz 3 wird die Pflanzenaufnahme 10 von dem ersten Trägerrahmen getrennt. Der erste Trägerrahmen wird anschließend beispielsweise in den Puffer 6 überführt. Die Pflanzenaufnahme 10 wird mit einem zweiten Trägerrahmen in Eingriff gebracht, so dass der zweite Trägerrahmen mit der Pflanzenaufnahme 10 ein zweites Blocklagerelement bildet. Dabei wird der zweite Trägerrahmen beispielsweise aus dem Puffer entnommen.

Das zweite Blocklagerelement wird anschließend von dem Fahrzeug in die zweite Zone 5 überführt, wobei das zweite Blocklagerelement in einen Blocklagerelementaufnahmeraum der zweiten Zone eingelagert wird. **In** der zweiten Zone ist die Atmosphäre und die Beleuchtung an Wachstumsstadium und entsprechende Anforderungen der Pflanze angepasst.

Ebenfalls ist der zweite Trägerrahmen an die benötigten Bedingungen der Pflanze angepasst. Der zweite Trägerrahmen erlaubt eine größere Ausdehnung in Schwerkraftrichtung der Pflanze. Außerdem benötigen Pflanzen in späteren Wachstumsphasen mehr Licht, so dass der zweite Trägerrahmen eine andere Beleuchtungseinrichtung aufweist. Dabei ist die Beleuchtungseinrichtung so angeordnet, dass diese in Schwerkraftrichtung nach unten strahlt. In einem Blocklagerelementstapel wird also ein Blocklagerelement insbesondere die Pflanzenaufnahme 10 von oben bestrahlt.

Der Vorgang des Umlagerns von einer Zone 4,5 in eine andere Zone 5,4 und dem damit verbundenen Umlagern der Pflanzenaufnahme 10 von einem Trägerrahmen in einen anderen Trägerrahmen kann entsprechend der Bedürfnisse der Pflanze wiederholt werden. Dabei kann jede Zone und jeder Trägerrahmen an die Bedürfnisse der Pflanze in einem entsprechenden Wachstumsstadium angepasst werden.

Sobald die Pflanzen ein erntereifes Stadium erreichen, werden diese samt Pflanzenaufnahme 10 und dem Trägerrahmen, hier beispielsweise dem zweiten Trägerrahmen, als zweites Blocklagerelement aus der zweiten Zone durch das Fahrzeug zum Auslagerungsplatz 2 überführt.

Am Auslagerungsplatz 2 wird die Pflanzenaufnahme 10 vom zweiten Trägerrahmen getrennt, wobei der zweite Trägerrahmen anschließend beispielsweise in den Puffer 6 überführt wird. Dabei kann der Puffer 6 beispielsweise auch in der ersten Zone 4 und/oder in der zweiten Zone 5 angeordnet sein, wobei in der ersten Zone 4 und der zweiten Zone 5 sind Pflanzen mit unterschiedlichem Wachstumsfortschritt eingelagert sind.

Die erntereifen Pflanzen der Pflanzenaufnahme 10 werden abgeerntet. Anschließend wird die Pflanzenaufnahme 10 durch die Überführungsanordnung 8 zur Reinigungseinrichtung 9 überführt, wobei die Reinigungseinrichtung 9 die Pflanzenaufnahme 10 reinigt und/oder desinfiziert. Anschließend wird die Pflanzenaufnahme 10 zum Einlagerungs-/Umlagerungsplatz 3 gebracht, wo diese erneut mit Samen oder Setzlingen bestückt wird. Dabei dient die Überführungsanordnung 8 zur Bereitstellung der Pflanzenaufnahmen 10. Der Überführungsanordnung 8 kommt also auch eine Pufferfunktion zu.

Die Trägerrahmen werden dabei ausschließlich durch das Fahrzeug bewegt. Weiterhin kann das Fahrzeug die Trägerrahmen von der Pflanzenaufnahme 10 trennen, so dass die Pflanzenaufnahme am Einlagerungs-/Umlagerungsplatz 3 und/oder Auslagerungsplatz 2 vom Trägerrahmen abgenommen werden können. Weiterhin können mehrere Fahrzeuge vorgesehen sein.

Es werden beispielsweise stets komplette Blocklagerelementstapel eingelagert, umgelagert oder ausgelagert. Der komplette Blocklagerelementstapel bezieht sich auf die maximale Aufnahmekapazität eines Blocklagerelementaufnahmeraums. Dabei werden die Blocklagerelemente vom Fahrzeug ausgehend von einem Blocklagerelementaufnahmeraum einzeln in einen anderen Blocklagerelementaufnahmeraum überführt. Somit ist jedem Blocklagerelementaufnahmeraum beispielsweise ein fester Zeitraum der Wachstumsphase der Pflanzen zugeteilt. So ist beispielsweise ein erster Blocklagerelementaufnahmeraum dem ersten Tag der Wachstumsphase zugeteilt, ein zweiter Blocklagerelementaufnahmeraum einem zweiten Tag der Wachstumsphase usw. Entsprechend des Zeitraums der Wachstumsphase wird die Anzahl der Blocklagerelementaufnahmeräume definiert.

Dargestellt ist, dass die Zonen 4, 5 räumlich voneinander getrennt sind. Sie können jedoch auch aneinander anschließen.

### Bezugszeichenliste

- 1: Gewächshausanordnung
- 2: Auslagerungsplatz
- 3: Einlagerungs-/Umlagerungsplatz
- 4: erste Zone
- 5: zweite Zone
- 6: Puffer
- 7: Verfahrweg
- 8: Überführungsanordnung
- 9: Reinigungseinrichtung
- 10: Pflanzenaufnahme

## Patentansprüche

1. Verfahren zum Betreiben einer Gewächshausanordnung (1) mit einem Blocklager, wenigstens einem Blocklagerelement und wenigstens einem Fahrzeug, wobei
jedes Blocklagerelement einen Trägerrahmen und eine Pflanzenaufnahme (10) aufweist, wobei die Pflanzenaufnahme (10) lösbar mit dem Trägerrahmen in Eingriff gebracht wird, wobei
das Blocklager wenigstens eine erste Zone (4) und eine zweite Zone (5) und wenigstens einen ersten Trägerrahmen und wenigstens einen zweiten Trägerrahmen aufweist, wobei sich der erste Trägerrahmen vom zweiten Trägerrahmen unterscheidet, wobei
die Pflanzenaufnahme (10) in der ersten Zone (4) mit dem ersten Trägerrahmen in lösbaren Eingriff ist, und die Pflanzenaufnahme (10) anschließend in die zweite Zone (5) überführt wird, wobei die Pflanzenaufnahme (10) im Rahmen der Überführung von der ersten Zone (4) in die zweite Zone (5) vom ersten Trägerrahmen auf den zweiten Trägerrahmen überführt wird, wobei die Pflanzenaufnahme (10) in der zweiten Zone (5) in lösbaren Eingriff mit dem zweiten Trägerrahmen gebracht wird.

2. Verfahren nach Anspruch 1, **dadurch gekennzeichnet, dass** in der ersten Zone (4) eine mit Setzlingen und/oder Pflanzen in einer ersten Wachstumsphase bestückte Pflanzenaufnahme (10) durch eine erste Beleuchtungsanordnung eines in Schwerkraftrichtung oberhalb angeordneten ersten Trägerrahmens beleuchtet wird und/oder in der zweiten Zone (5) eine Pflanzen in einer zweiten Wachstumsphase aufweisende Pflanzenaufnahme (10) durch eine zweite Beleuchtungsanordnung eines in Schwerkraftrichtung oberhalb angeordneten zweiten Trägerrahmens beleuchtet wird.

3. Verfahren nach Anspruch 1 oder 2, **dadurch gekennzeichnet, dass** die Pflanzenaufnahme (10) an einem Einlagerungsplatz (3) außerhalb des Blocklagers mit Setzlingen und/oder Pflanzen bestückt wird und anschließend mit dem ersten Trägerrahmen in Eingriff gebracht wird und in die erste Zone (4) des Blocklagers eingelagert wird.

4. Verfahren nach einem der Ansprüche 1 bis 3, **dadurch gekennzeichnet, dass** die Pflanzenaufnahme (10) im Rahmen einer Überführung von dem ersten Trägerrahmen auf den zweiten Trägerrahmen an einem Umlagerungsplatz (3) umgelagert wird.

5. Verfahren nach einem der Ansprüche 1 bis 4, **dadurch gekennzeichnet, dass** der Trägerrahmen mit der Pflanzenaufnahme (10) mit erntefähigen Pflanzen zu einem Auslagerungsplatz (2) überführt wird, wobei an dem Auslagerungsplatz (2) die Pflanzenaufnahme (10) von dem Trägerrahmen getrennt wird.

6. Verfahren nach einem der Ansprüche 1 bis 5, **dadurch gekennzeichnet, dass** die Pflanzenaufnahme (10) ausgehend von dem Auslagerungsplatz (2) zu dem Einlagerungsplatz (3) überführt wird, wobei die Pflanzenaufnahme (10) auf dem Weg vom Auslagerungsplatz (2) zum Einlagerungsplatz (3) gereinigt wird.

7. Verfahren nach einem der Ansprüche 1 bis 6, **dadurch gekennzeichnet, dass** die Gewächshausanordnung (1) einen ersten Puffer (6) und einen zweiten Puffer (6) aufweist, wobei erste Trägerrahmen mit einer unbestückten Pflanzenaufnahme (10) oder ohne die Pflanzenaufnahme (10) in dem ersten Puffer (6) entnehmbar eingelagert werden und zweite Trägerrahmen mit einer unbestückten Pflanzenaufnahme (10) oder ohne die Pflanzenaufnahme (10) in dem zweiten Puffer (6) entnehmbar eingelagert werden.

8. Gewächshausanordnung (1) mit einem Blocklager, wenigstens einem Blocklagerelement und wenigstens einem Fahrzeug,
wobei im Blocklager wenigstens ein Blocklagerelement temporär aufnehmbar ist, wobei das Blocklagerelement einen Trägerrahmen und eine mit dem Trägerrahmen lösbar in Eingriff stehende Pflanzenaufnahme (10) aufweist,
wobei das Blocklager wenigstens eine erste Zone (4) und eine zweite Zone (5) aufweist,
wobei ein erster Trägerrahmen mit der Pflanzenaufnahme (10) ein erstes Blocklagerelement bildet, und ein zweiter Trägerrahmen mit der Pflanzenaufnahme (10) ein zweites Blocklagerelement bildet, wobei sich der erste Trägerrahmen vom zweiten Trägerrahmen unterscheidet, wobei das erste Blocklagerelement in der ersten Zone (4) einlagerbar ist und das zweite Blocklagerelement in der zweiten Zone (5) einlagerbar ist, wobei die Pflanzenaufnahme (5) von dem ersten Trägerrahmen auf den zweiten Trägerrahmen überführbar ist.

9. Gewächshausanordnung nach Anspruch 8 **dadurch gekennzeichnet, dass** der erste Trägerrahmen eine erste Beleuchtungsanordnung und/oder zweite Trägerrahmen eine zweite Beleuchtungsanordnung aufweist.

10. Gewächshausanordnung nach Anspruch 8 oder 9 **dadurch gekennzeichnet, dass** eine Ausdehnung des ersten Trägerrahmens in Schwerkraftrichtung kleiner ist als eine Ausdehnung des zweiten Trägerrahmens in Schwerkraftrichtung.

11. Gewächshausanordnung nach Anspruch 8 oder 10 **dadurch gekennzeichnet, dass** die Gewächshausanordnung (1) einen Einlagerungsplatz (3), einen Auslagerungsplatz (2) und einen Umlagerungsplatz (3) aufweist.

12. Gewächshausanordnung nach einem der Ansprüche 8 bis 11 **dadurch gekennzeichnet, dass** der Einlagerungsplatz (3) und/oder der Auslagerungsplatz (2) den Umlagerungsplatz (3) umfassen, und/oder der Einlagerungsplatz (3) den Auslagerungsplatz (2) umfasst.

13. Gewächshausanordnung nach einem der Ansprüche 8 bis 12 **dadurch gekennzeichnet, dass** zwischen dem Auslagerungsplatz (2) und dem Einlagerungsplatz (3) eine Überführungsanordnung (8) vorgesehen ist.

14. Gewächshausanordnung nach einem der Ansprüche 8 bis 13 **dadurch gekennzeichnet, dass** die Überführungsanordnung (8) eine Reinigungseinrichtung (9) aufweist.

15. Gewächshausanordnung nach einem der Ansprüche 8 bis 14 **dadurch gekennzeichnet, dass** die Gewächshausanordnung einen ersten Puffer (6) zur Aufnahme von wenigstens einem ersten Transportrahmen und einen zweiten Puffer (6) zur Aufnahme von wenigstens einem zweiten Transportrahmen aufweist.

## Claims

1. Method for operating a greenhouse arrangement (1) with a block storage, at least one block storage element and at least one vehicle,
wherein each block storage element has a support frame and a plant receptacle (10),
wherein the plant receptacle (10) is detachably engaged with the support frame, wherein
the block storage has at least a first zone (4) and a second zone (5) and at least one first support frame and at least one second support frame, wherein the first support frame differs from the second support frame,
wherein the plant receptacle (10) is detachably engaged with the first support frame in the first zone (4), and the plant receptacle (10) is then transferred to the second zone (5),
wherein the plant receptacle (10) is transferred from the first zone (4) to the second zone (5) from the first support frame to the second support frame during the transfer,
wherein the plant receptacle (10) in the second zone (5) is brought into releasable engagement with the second support frame.

2. Method according to claim 1, **characterized in that** in the first zone (4) a plant receptacle (10) equipped with seedlings and/or plants in a first growth phase is illuminated by a first lighting arrangement of a first support frame arranged above in the direction of gravity, and/or in the second zone (5) a plant receptacle (10) containing plants in a second growth phase is illuminated by a second lighting arrangement of a second support frame arranged above in the direction of gravity.

3. Method according to claim 1 or 2, **characterized in that** the plant receptacle (10) is loaded with seedlings and/or plants at a storage location (3) outside the block storage and is then brought into engagement with the first support frame and stored in the first zone (4) of the block storage.

4. Method according to one of claims 1 to 3, **characterized in that** the plant receptacle (10) is transferred from the first carrier frame to the second carrier frame at a transfer location (3) as part of a transfer process.

5. Method according to one of claims 1 to 4, **characterized in that** the carrier frame with the plant receptacle (10) containing harvestable plants is transferred to a removal location (2), where the plant receptacle (10) is separated from the carrier frame.

6. Method according to one of claims 1 to 5, **characterized in that** the plant receptacle (10) is transferred from the removal location (2) to the storage location (3), wherein the plant receptacle (10) is cleaned on the way from the removal location (2) to the storage location (3).

7. Method according to one of claims 1 to 6, **characterized in that** the greenhouse arrangement (1) has a first buffer (6) and a second buffer (6), wherein first carrier frames with an unloaded plant receptacle (10) or without the plant receptacle (10) are removably stored in the first buffer (6) and second carrier frames with an unloaded plant receptacle (10) or without the plant receptacle (10) are removably stored in the second buffer (6).

8. Greenhouse arrangement (1) with a block storage, at least one block storage element and at least one vehicle,
wherein at least one block storage element can be temporarily accommodated in the block storage,
wherein the block storage element has a support frame and a plant receptacle (10) which can be detachably engaged with the support frame,
wherein the block storage has at least a first zone (4) and a second zone (5),
wherein a first support frame with the plant receptacle (10) forms a first block storage element, and a second support frame with the plant receptacle (10) forms a second block storage element,
wherein the first support frame differs from the second support frame,
wherein the first block storage element can be stored in the first zone (4) and the second block storage element can be stored in the second zone (5),
wherein the plant receptacle (5) can be transferred from the first support frame to the second support frame.

9. Greenhouse arrangement according to claim 8, **characterized in that** the first support frame has a first lighting arrangement and/or the second support frames have a second lighting arrangement.

10. Greenhouse arrangement according to claim 8 or 9, **characterized in that** an extension of the first support frame in the direction of gravity is smaller than an extension of the second support frame in the direction of gravity.

11. Greenhouse arrangement according to claim 8 or 10, **characterized in that** the greenhouse arrangement (1) has a storage location (3), a removal location (2) and a transfer location (3).

12. Greenhouse arrangement according to one of claims 8 to 11, **characterized in that** the storage location (3) and/or the removal location (2) comprise the transfer location (3), and/or the storage location (3) comprises the removal location (2).

13. Greenhouse arrangement according to one of claims 8 to 12, **characterized in that** a transfer arrangement (8) is provided between the removal location (2) and the storage location (3).

14. Greenhouse arrangement according to one of claims 8 to 13, **characterized in that** the transfer arrangement (8) has a cleaning device (9).

15. Greenhouse arrangement according to one of claims 8 to 14, **characterized in that** the greenhouse arrangement has a first buffer (6) for receiving at least one first transport frame and a second buffer (6) for receiving at least one second transport frame.

## Revendications

1. Procédé de fonctionnement d'un agencement de serre (1) avec un système d'entreposage en blocs, au moins un élément d'entreposage en blocs et au moins un véhicule, sachant que chaque élément d'entreposage en blocs comporte un cadre porteur et un logement pour plants (10) sachant que le logement pour plants (10) est monté en prise de façon amovible avec le cadre porteur,
sachant que le système d'entreposage en blocs comporte au moins une première zone (4) et une deuxième zone (5) et au moins un premier cadre porteur et au moins un deuxième cadre porteur, sachant que le premier cadre porteur se distingue du deuxième cadre porteur,
sachant que le logement pour plants (10) est en prise amovible dans la première zone (4) avec le premier cadre porteur et le logement pour plants (10) est ensuite transféré dans la deuxième zone (5), sachant que le logement pour plants (10) est transféré dans le cadre du transfert de la première zone (4) à la deuxième zone (5) du premier cadre porteur au deuxième cadre porteur, sachant que le logement pour plants (10) est placé dans la deuxième zone (5) en prise amovible avec le deuxième cadre porteur.

2. Procédé selon la revendication 1, ***caractérisé* en ce que** dans la première zone (4), un logement pour plants (10) doté de semis et/ou de plants dans une première phase de croissance est éclairé par un premier système d'éclairage d'un premier cadre porteur disposé au-dessus en direction de la gravité et/ou dans la deuxième zone (5) un logement pour plants (10) comportant des plants dans une deuxième phase de croissance est éclairé par un deuxième système d'éclairage d'un deuxième cadre porteur disposé au-dessus en direction de la gravité.

3. Procédé selon la revendication 1 ou 2, ***caractérisé* en *ce que*** le logement pour plants (10) est doté de semis et/ou de plants à un emplacement d'entreposage (3) en dehors du système d'entreposage en blocs et est placé ensuite en prise avec le premier cadre porteur et est entreposé dans la première zone (4) du système d'entreposage en blocs.

4. Procédé selon l'une quelconque des revendications 1 à 3*, **caractérisé en ce que*** le logement pour plants (10) est transposé à un emplacement de transposition (3) dans le cadre d'un transfert du premier cadre porteur au deuxième cadre porteur.

5. Procédé selon l'une quelconque des revendications 1 à 4*, **caractérisé en ce que*** le cadre porteur avec le logement pour plants (10) avec des plants récoltables est transféré à un emplacement de déstockage (2), sachant qu'à l'emplacement de déstockage (2), le logement pour plants (10) est séparé du cadre porteur.

6. Procédé selon l'une quelconque des revendications 1 à 5*, **caractérisé en ce que*** le logement pour plants (10) est transféré à l'emplacement d'entreposage (3) en partant de l'emplacement de déstockage (2), sachant que le logement pour plants (10) est nettoyé sur le chemin de l'emplacement de déstockage (2) à l'emplacement d'entreposage (3).

7. Procédé selon l'une quelconque des revendications 1 à 6*, **caractérisé en ce que*** l'agencement de serre (1) comporte un premier élément tampon (6) et un deuxième élément tampon (6), sachant que les premiers cadres porteur sont entreposés pouvant être enlevés avec un logement pour plants (10) non garni ou sans le logement pour plants (10) dans le premier élément tampon (6) et les deuxièmes cadres porteur sont entreposés pouvant être enlevés avec un logement pour plants (10) non garni ou sans le logement pour plants (10) dans le deuxième élément tampon (6).

8. Agencement de serre (1) avec un système d'entreposage en blocs, au moins un élément d'entreposage en blocs et au moins un véhicule,
sachant qu'au moins un élément d'entreposage en blocs peut être logé temporairement dans le système d'entreposage en blocs,
sachant que l'élément d'entreposage en blocs comporte un cadre porteur et un logement pour plants (10) se trouvant en prise de façon amovible avec le cadre porteur,
sachant que le système d'entreposage en blocs comporte au moins une première zone (4) et une deuxième zone (5),
sachant qu'un premier cadre porteur forme avec le logement pour plants (10) un premier élément d'entreposage en blocs et un deuxième cadre porteur forme avec le logement pour plants (10) un deuxième élément d'entreposage en blocs, sachant que le premier cadre porteur se distingue du deuxième cadre porteur, sachant que le premier élément d'entreposage en blocs peut être entreposé dans la première zone (4) et le deuxième élément d'entreposage en blocs peut être entreposé dans la deuxième zone (5), sachant que le logement pour plants (5) peut être transféré du premier cadre porteur au deuxième cadre porteur.

9. Agencement de serre selon la revendication 8, ***caractérisé en ce que*** le premier cadre porteur comporte un premier système d'éclairage et/ou le deuxième cadre porteur comporte un deuxième système d'éclairage.

10. Agencement de serre selon la revendication 8 ou 9, ***caractérisé en ce qu***'une extension du premier cadre porteur en direction de la gravité est plus petite qu'une extension du deuxième cadre porteur dans la direction de la gravité.

11. Agencement de serre selon la revendication 8 ou 10, ***caractérisé en ce que*** l'agencement de serre (1) comporte un emplacement d'entreposage (3), un emplacement de déstockage (2) et un emplacement de transposition (3).

12. Agencement de serre selon l'une quelconque des revendications 8 à 11, ***caractérisé en ce que*** l'emplacement d'entreposage (3) et/ou l'emplacement de déstockage (2) comprennent l'emplacement de transposition (3) et/ou l'emplacement d'entreposage (3) comprend l'emplacement de déstockage (2).

13. Agencement de serre selon l'une quelconque des revendications 8 à 12, ***caractérisé en ce qu***'un agencement de transfert (8) est prévu entre l'emplacement de déstockage (2) et l'emplacement d'entreposage (3).

14. Agencement de serre selon l'une quelconque des revendications 8 à 13, **caractérisé en ce que** l'agencement de transfert (8) comporte un dispositif de nettoyage (9).

15. Agencement de serre selon l'une quelconque des revendications 8 à 14, **caractérisé en ce que** l'agencement de serre comporte un premier élément tampon (6) destiné à recevoir au moins un premier cadre de transport et un deuxième élément tampon (6) destiné à recevoir au moins un deuxième cadre de transport.
